# EUROPEAN PATENT SPECIFICATION

(11) **EP 2 785 017 B1**
(45) Date of publication and mention of the grant of the patent: **11.07.2018**
(21) Application number: 13305386.8
(22) Date of filing: 28.03.2013
(51) Int. Cl.: H04L 29/08

(54) **Content-centric networking**
Inhaltzentriertes Netzwerken
Réseautage centré sur le contenu

(43) Date of publication of application: 01.10.2014
(73) Proprietor: Alcatel Lucent, 91620 Nozay (FR)
(72) Inventor: Franck, Franck, Dublin, 15 (IE); Jul, Eric, Dublin, 15 (IE)
(74) Representative: Berthier, Karine

(56) References cited:
- VAN JACOBSON ET AL: "Networking Named Content", CONEXT '09 PROCEEDINGS OF THE 5TH INTERNATIONAL CONFERENCE ON EMERGING NETWORKING EXPERIMENTS AND TECHNOLOGIES; DECEMBER 1 - 4, 2009; ROME, ITALY, ASSOCIATION FOR COMPUTING MACHINERY, NEW YORK, NY, USA, 1 December 2009 (2009-12-01), pages 1-12, XP002608160, DOI: 10.1145/1658939.1658941 ISBN: 978-1-60558-636-6 [retrieved on 2010-11-02]
- RAFFAELE CHIOCCHETTI ET AL: "Exploit the known or explore the unknown?", INFORMATION-CENTRIC NETWORKING, ACM, 2 PENN PLAZA, SUITE 701 NEW YORK NY 10121-0701 USA, 17 August 2012 (2012-08-17), pages 7-12, XP058008091, DOI: 10.1145/2342488.2342491 ISBN: 978-1-4503-1479-4
- GIOVANNA CAROFIGLIO ET AL: "Joint hop-by-hop and receiver-driven interest control protocol for content-centric networks", INFORMATION-CENTRIC NETWORKING, ACM, 2 PENN PLAZA, SUITE 701 NEW YORK NY 10121-0701 USA, 17 August 2012 (2012-08-17), pages 37-42, XP058008096, DOI: 10.1145/2342488.2342497 ISBN: 978-1-4503-1479-4
- ZHANG L ET AL: "Named Data Networking (NDN) Project", INTERNET CITATION, 31 October 2010 (2010-10-31), pages I-II, XP002687393, Retrieved from the Internet: URL:http://www.named-data.net/techreport/T R001ndn-proj.pdf [retrieved on 2012-10-01]
- XIE HUAWEI & USTC Y SUN INSTITUTE OF COMPUTING TECHNOLOGY G WANG HUAWEI (USA) H WU H: "Scalable Hybrid Routing for Information-Centric Networks; draft-xie-icnrg-hybrid-routing-00.txt", SCALABLE HYBRID ROUTING FOR INFORMATION-CENTRIC NETWORKS; DRAFT-XIE-ICNRG-HYBRID-ROUTING-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 18 February 2013 (2013-02-18), pages 1-16, XP015090220, [retrieved on 2013-02-18]
- MD FAIZUL BARI ET AL: "A survey of naming and routing in information-centric networks", IEEE COMMUNICATIONS MAGAZINE, IEEE SERVICE CENTER, PISCATAWAY, US, vol. 50, no. 12, 1 December 2012 (2012-12-01), pages 44-53, XP011483261, ISSN: 0163-6804, DOI: 10.1109/MCOM.2012.6384450

## Description

### FIELD OF THE INVENTION

The present invention relates to a content-centric network node method, a content-centric network node and a computer program product.

### BACKGROUND

Content-centric networking is known. In such content-centric networking, a routing paradigm is provided for delivery of content in a data network. In particular, requests (known as interest packets) for content are made to network nodes within the content-centric network and, if a network node receiving that request has a copy of that content, then this content is routed back to the requesting node. However, if a network node does not have that content, then a copy of the request is stored by the network node and the request is promulgated through the network until the content is returned or, if no content is returned, then an error message is provided to the requesting node. Typically, as the content is passed back to the requesting node, a copy of that content may be stored locally by network nodes in order that they have the content accessible, should a subsequent request for that content be made.

Although such an approach enables content to be provided, this is not without its own shortcomings.

Accordingly, it is desired to provide an improved technique for content-centric networking.

"Networking Named Content", from the Proceedings of the 5th International Conference on Emerging Networking Experiments and Technologies December 1 - 4 2009, Rome, Italy, Association for Computing Machinery NY USA pages 1 - 12 1 Dec 2009 discloses a content centric network node, where two packet types, interest and data, are transmitted over the Internet. Any node receiving an interest packet and having the data responds with a data packet. If the node does not have the data it forwards it to a potential source of matching data. It keeps track of interest forwarded upstream so that returned data can be sent downstream back to the requester.

"Exploit the Known or Explore the Unknown? Hamlet-like Doubts in ICN" by Chiocchetti et al. ACM 2 Penn Plaza Suit 701 NY 101210701 USA 17 August 2012 pages 7 - 12 discusses routing in information centric networks and addresses the problem of the proliferation of requests over multiple paths using TTL based scoping. TTL based scoping sets the number of "hops" a packet is allowed to make before it expires on the network.

### SUMMARY

According to a first aspect, there is provided a method for a network node of a content-centric network the method, comprising: receiving an interest packet over a link from a requesting network node requesting content be provided, said interest packet having a received charge value associated therewith, a magnitude of said charge value affecting how far the interest packet is able to propagate throughout the network; wherein said received charge value comprises a transmitted charge value of said interest packet reduced by a resistance associated with said link over which said interest packet is received; determining whether said content is available to said network node and, if not, identifying available onward links to other network nodes; splitting said received charge value between duplicated interest packets (62, 63, 64), each having a transmitted charge value; and transmitting one of said duplicated interest packets over each available onward link.

The first aspect recognises that existing content-centric network approaches for the provision of requested content have limitations regarding their flooding/recovery time, their ability to cope with network changes and their inability to provide for multi-point delivery. In particular, in existing approaches, the flooding/recovery time of the network is less than optimal. The flooding/recovery time (which is also known as the convergence time) is the time that it takes for the network, in the face of changes to the network, to become aware that data packets destined for a given destination must travel across a route which differs to that used previously. Providing optimal flooding/recovery time often involves a trade-off between the amount of data traffic to expend on disseminating the new routing information (the degree of flooding) versus the time taken to reach a steady routing state (the recovery time). Also, in existing approaches, the ability of the network to handle changes in the routing state (for example, content producers moving around the network) is less than optimal. Many current solutions impose a redirection overlay on top of what is otherwise a static routing model (for example, mobile internet protocol (Mobile IP) uses this approach). This can cause traffic to be redirected around the network before finding its final destination which, in turn, causes excess load on the network links. A highly dynamic network would need to quickly learn that a new best route to a piece of content exists and then not have to relay traffic over out of date routes. Also, in existing networks, the inability to provide multi-point delivery is an issue. If routing in a network is done purely on content names, and thus no notion of network addresses or host names is needed, then there is no need to think of content as residing in one place on the network. For example, considering a network node A, which is connected to network node B over a 3 Mbit/ s link and to another network node C over a different 3 Mbit/ s link, if both B and C have the content that A is looking for, then there is no reason for A to select among the two links for download, instead it can use multi-point delivery to have the content delivered from both nodes, utilising the full 6 Mbit/s bandwidth. However, only an approach capable of such multi-point delivery will be able to accomplish this. Many current internet protocols are designed for single-point to single-point delivery and so do not support such multi-point delivery. Accordingly, the first aspect recognises that current networks must have either a complete routing table (i.e. routing tables that list every retrievable resource) or a name resolution overlay (such as ANS) available to accomplish efficient routing. Each of these approaches makes it difficult to provide a flexible, controllable and efficient arrangement for accessing content in highly reconfigurable, dynamic networks.

Accordingly, a network node method for use in a content-centric network may be provided. The method may comprise the step of receiving an interest packet from a requesting network node. The interest packet may be received over a link from that requesting network node. The interest packet may request content be provided to the requesting network node. The interest packet may have a received charge value which is associated with the interest packet. The method may comprise the step of determining whether the content is available to the network node. In the event that the content is not available to the network node, then the method may comprise the step of identifying onward links to other network nodes. The method may also comprise the step of splitting the received charge value between duplicated or repeated interest packets. Each of the duplicated interest packets may have a transmitted charge value which is that duplicated interest packet's proportion of the split received charge value. The method may also comprise the step of transmitting a duplicated interest packet over each available onward link. In this way, interest packets may be split and propagated by the network node to be transmitted onto multiple network nodes, but the propagation of those interest packets may be controlled and limited based on the charge associated with those interest packets. Controlling how the charge is allocated between the interest packets and how that charge is affected by propagation through the network provides for a flexible, controllable and efficient arrangement for accessing content in highly reconfigurable, dynamic networks.

In one embodiment, the step of splitting comprises splitting the received charge one of equally and non-equally between the duplicated interest packets. Accordingly, the received charge value may be split equally between each of the duplicated interest packets and that split charge associated with those duplicated interest packets may be provided as the transmitted charge value. Equally, the charge may be split other than equally between the duplicated interest packets in order to favour transmission over one route rather than another.

In one embodiment, the step of splitting comprises splitting the received charge between the duplicated interest packets based on a resistance of the onward links. For example, where links have resistances and the resistances of the links differ, the charge may be split non-equally in order to favour transmission using either low or high resistance links.

In one embodiment, the available onward links comprise all other links between the network node and other network nodes. Accordingly, all links other than the link over which the interest packet was received may comprise the available links.

Each onward link has a resistance associated therewith and the available onward links comprise those onward links for which a transmitted charge value of the duplicated interest packet reduced by the resistance associated with the link over which the interest packet is received fails to be exhausted. Accordingly, the available onward links may be those links where the transmitted charge value of the interest packet would not be reduced by that resistance to below a threshold amount which would effectively extinguish, eliminate or exhaust the charge of the interest packet.

In one embodiment, each onward link has a resistance associated therewith and the available onward links comprise those onward links whose resistance fails to exceed the transmitted charge value of a duplicated interest packet intended for that onward link. Accordingly, the available links may comprise those links whose transmitted charge value exceeds the resistance value of that link, thereby ensuring that the charge is not extinguished, eliminated or exhausted by the time the interest packet is received by the receiving network node over the link.

In one embodiment, the received charge value comprises a transmitted charge value of the interest packet reduced by the resistance associated with the link over which the interest packet is received. Accordingly, the transmitted charge value is reduced, attenuated or abated by the resistance associated with the link over which the interest packet is received. Reducing the charge effectively assigns a 'cost' to the transmission of the interest packet over that link and helps to limit the extent to which the interest packets can be split and the distance that the interest packets can travel.

In one embodiment, the method comprises storing the interest packet with the received charge value. Storing the interest packet with the received charge ensures that should content subsequently be provided, then this can be associated with an interest packet that requested it.

In one embodiment, the method comprises degrading the received charge value. By degrading, reducing or diminishing the received charge value, the amount of time that the interest packet is stored can be limited. The degrading of the charge may occur linearly, exponentially or using some other function.

In one embodiment, the method comprises removing interest packets whose received charge value fails to exceed a threshold. Removing those interest packets having a minimal charge helps to ensure that pending interest packets do not remain pending indefinitely throughout the network and are deleted after a reasonable amount of time.

In one embodiment, the method comprises generating the interest packet with the transmitted charge value. The amount or magnitude of transmitted charge value may vary and will affect how far the interest packet is able to propagate throughout the network. It may be possible to generate interest packets for important or high priority content with a higher transmitted charge value than those for less important or lower priority content.

In one embodiment, the method comprises on determining that the content is available, transmitting the content over a link which received the interest packet, the content having a content transmitted charge value. Accordingly, the content may be transmitted back over the link over which the interest packet was received. This begins to route the content back to the requesting node. The content may be transmitted with a transmitted charge value. The amount or magnitude of the transmitted charge value will also affect how far the content can propagate through the network and how long it may be stored by network nodes.

In one embodiment, the method comprises on receipt of content with a content received charge value, identifying whether at least one interest packet for that content is stored by the network node and, if so, transmitting the content over those links which received the at least one interest packet, the content having a content transmitted charge value. Accordingly, if one or more interest packet is stored which requests the content, then the content may be transmitted over one or more links back towards the requesting nodes. In one embodiment, when the content is transmitted over different links, the received charge value may be split between the content being transmitted over the different links.

In one embodiment, the content received charge value comprises the content transmitted charge value of the content reduced by the resistance associated with the link over which the content is received. Accordingly, the transmitted charge is reduced when travelling over a link in order to attribute a cost to transmitting that content over that link.

In one embodiment, the method comprises storing the content with the content received charge value. Accordingly, the content may be stored or cached within the network node in order to be available in response to subsequent interest packets. In one embodiment, the received charge value is split between the content stored and that transmitted in response to the interest packet.

In one embodiment, the method comprises degrading the content received charge value. Accordingly, the charge value of the stored content may be reduced over time. The degrading of the charge may occur linearly, exponentially or using some other function.

In one embodiment, the method comprises removing content whose content received charge value fails to exceed a threshold. Accordingly, content whose charge value has been extinguished, eliminated or exhausted may be deleted from the network node.

In one embodiment, the method comprises removing content when the content received charge value reduced by the resistance associated with the link over which the content is to be transmitted is exhausted. Accordingly, should the content no longer be transmittable over the links because their resistance is too high for the charge associated with the content, then the content is deleted.

In one embodiment, the method comprises removing content when the content received charge value is lower than the resistance associated with the link over which the content is to be transmitted.

In one embodiment, the method comprises varying resistance of links with other network nodes in response to changes in operating conditions of the network node. Accordingly, the cost associated with transmitting data packets over any particular link may be varied depending on the current operating state of the network node. In one embodiment, the resistance varies based on interest packet or content prefixes. This enables some interest packets or content to be prioritised over others.

According to a second aspect, there is provided a computer program product operable, when executed on a computer, to perform the method steps of the first aspect.

According to a third aspect, there is provided a content-centric network node, comprising: reception logic operable to receive an interest packet over a link from a requesting network node requesting content be provided, the interest packet having a received charge value associated therewith; a magnitude of said charge value affecting how far the interest packet is able to propagate throughout the network; wherein said received charge value comprises a transmitted charge value of said interest packet reduced by a resistance associated with said link over which said interest packet is received; and logic operable to determine whether the content is available to the network node and, if not, to identify available onward links to other network nodes, to split the received charge between duplicated interest packets, each having a transmitted charge value and to transmit one of the duplicated interest packets over each available onward link.

In one embodiment, the logic is operable to split the received charge one of equally and non-equally between the duplicated interest packets.

In one embodiment, the available onward links comprise all other links between the network node and other network nodes.

In one embodiment, each onward link has a resistance associated therewith and the available onward links comprise those onward links for which a transmitted charge value of the interest packet reduced by the resistance associated with the link over which the interest packet is received fails to be exhausted.

Each onward link has a resistance associated therewith and the available onward links comprise those onward links whose resistance fails to exceed the transmitted charge value of a duplicated interest packet intended for that onward link.

In one embodiment, the received charge value comprises a transmitted charge value of the interest packet reduced by the resistance associated with the link over which the interest packet is received.

In one embodiment, the network node comprises storage operable to store the interest packet with the received charge value.

In one embodiment, the logic is operable to degrade the received charge value.

In one embodiment, the storage is operable to remove interest packets whose received charge value fails to exceed a threshold.

In one embodiment, the network node comprises generation logic operable to generate the interest packet with the transmitted charge value.

In one embodiment, the logic is operable on determining that the content is available, to transmit the content over a link which received the interest packet, the content having a content transmitted charge value.

In one embodiment, the logic is operable, on receipt of content with a content received charge value, to identify whether at least one interest packet for that content is stored by the network node and, if so, to transmit the content over those links which received the at least one interest packet, the content having a content transmitted charge value.

In one embodiment, the content received charge value comprises the content transmitted charge value of the content reduced by the resistance associated with the link over which the content is received.

In one embodiment, the storage is operable to store the content with the content received charge value.

In one embodiment, the logic is operable to degrade the content received charge value.

In one embodiment, the storage is operable to remove content whose content received charge value fails to exceed a threshold.

In one embodiment, the storage is operable to remove content when the content received charge value reduced by the resistance associated with the link over which the content is to be transmitted is exhausted.

In one embodiment, the storage is operable to remove content when the content received charge value is lower than the resistance associated with the link over which the content is to be transmitted.

In one embodiment, the logic is operable to vary resistance of links with other network nodes in response to changes in operating conditions of the network node.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

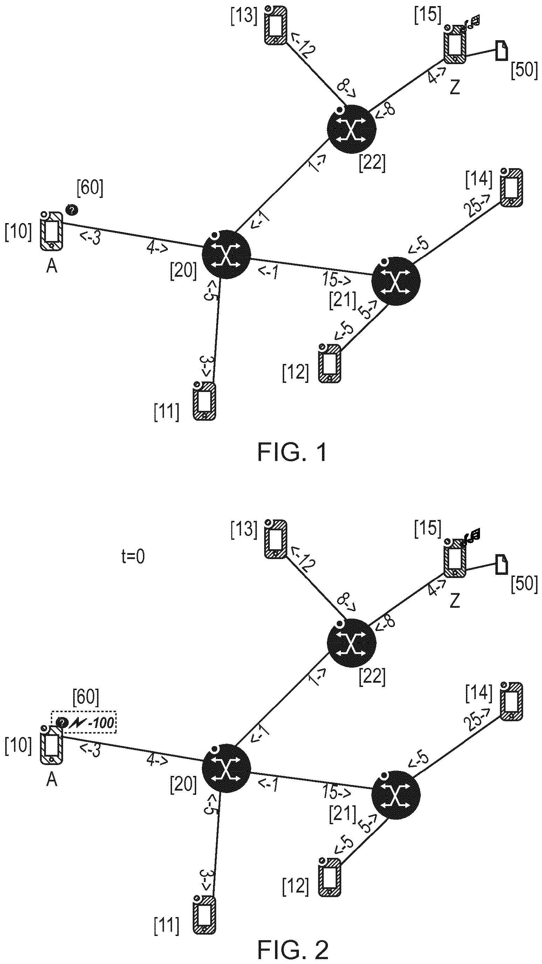

Figures 1 to 9 show an example simplified arrangement of a content-centric network and illustrate its operation during the transmission of an interest packet and the delivery of content in response according to one embodiment.

### DESCRIPTION OF THE EMBODIMENTS

### Overview

Before discussing the embodiments in any more detail, first an overview will be provided. When delivering content in an information-centric or content-centric network, the network mechanisms need to be able to locate a suitable source for the requested content and transport it to the requesting network node efficiently and effectively. It is desirable for these location and transportation mechanisms to possess a number of different characteristics such as, for example, using a minimum amount of network resources, having a quick response time, being responsive to changes in the network layout, not relying on a centralised service, amongst others. Embodiments seek to provide such location and transport mechanisms which seek to strike a balance between these characteristics. These mechanisms are particularly suited to name-based routing in highly mobile, sporadic networks that tend to have no centralised location services.

Embodiments seek to function in a similar manner to that of a 'lightning strike' to provide routing protocols for the transmission of data packets. During such lightning strikes, the electrical charge finds the best route from, for example, a negatively charged cloud to some suitably positively charged other cloud or part of the earth. The charge propagates along lines of least resistance without requiring prior knowledge about the conditions of the space between its origin and its destination. It also branches out during the strike along several lines of more or less resistance and then strikes along the line with least resistance.

Embodiments seek to provide similar characteristics for the transfer of data packets within a content-centric network. In such a content-centric network there are two basic types of data packets which are used for content delivery. The first is an interest (which are requests for named items of content), the second is the data (which are the content chunks which are delivered in response to an interest packet). Embodiments associate a charge (like an electrical charge) with each of these content-related packets transmitted within the network. In embodiments, interests have negative charges, whilst data have positive charges, although the reverse could equally be true. In addition, every link in the network (i.e. a communication path between two network nodes) has two resistances associated with it, one in each direction of data travel between the two network nodes. Nodes within the network are free to adjust the resistance of any of its incoming links as often as it likes in response to, for example, congestion, bandwidth utilisation, resource utilisation, etc. When a packet with a charge travels across a link, the magnitude of the charge will decrease, dependent on the resistance of the link. Thus, the further a packet travels, the weaker its charge will become as the magnitude tends towards zero or a 'neutral' charge. As with regular content-centric networks, interest packets may be split at any time and the charge of the interest packet is then shared between the newly-created interest packets.

When a node in the network issues an interest packet, it will generally follow the path in the network that has the least resistance (resistance may vary for different types of interest packets, depending on their prefix), but is likely to split and branch out from this path based on a statistical measure of how well-defined the path of least resistance is compared to other paths. This is similar to a lightning strike, where lightning leaders branch out from the tip of the lightning bolt to "feel" for the best path from a cloud to the ground. When an interest packet finds the source or a copy of the content it is requesting, the network node providing that content will construct a data packet and give it a charge to route it back to the requesting network node. Because the data charge is positive, where the interest charge is negative, the path taken by the interest from the content consumer to the content source will clearly stand out as the path of least resistance, allowing the data packet to find its way back. This is assisted by intervening network nodes storing a copy of each interest packet that passes through and associating the interest packet with the link over which the interest packet was received; this link may be used to route the content back to the content consumer. Also, where the interest packets find multiple sources or copies of the content at different locations, each of these may be provided back to the content consumer at the requesting node.

As a data packet is routed, any node may make a copy of it and store it for later delivery in response to other interest packets, in a similar way to other content-centric networks. However, in these embodiments the data packet's charge is stored along with the content of the data packet.

Just as in nature, these charges are not permanent. Any charge stored in the network (be it the interest charge or the data charge) decays with time and dies, exhausts or extinguishes when the charge goes below a minimum threshold level. The rate of decay may be linear or exponential or any other decay function. Thus, interests and content can be given a maximum age that they can be reliably stored, and best paths established for routing will fade when they are not used, thus increasing the likelihood of trying other paths rather than relying on stale routing information.

Accordingly, it can be seen that embodiments provide a multi-point-capable protocol that requires neither complete routing tables, nor an address resolution overlay to perform routing in a network with highly mobile content producers and consumers.

### Example Operation

Figures 1 to 7 show an example simplified arrangement of a content-centric network and illustrate its operation during the transmission of an interest packet and the delivery of content in response, which provides a replacement for an existing flooding-based discovery algorithm utilised in such content-centric networks. Mobile devices 10 to 15 are provided, together with router nodes 20 to 22. Content 50 is stored on the mobile device 15. Interest packets 60 to 66 are transmitted through the network and data packets 70 to 73 are sent back. The lines between network nodes are data communication links, with a resistance in each direction. Packets travel over each of the links. For the purpose of this embodiment, the links are assumed to provide reliable data transfer. Also, nodes are free to change the resistance of incoming links. When they do, they inform the network node at the other end of the link immediately.

### Interest Packet Propagation

Figure 1 illustrates the arrangement of the network before any request is made. Device 10 (A) wishes to receive a piece of content 50 located at device 15 (Z).

Figure 2 shows the arrangement of the network at time t=0. Device 10 creates an interest packet 60 that it can issue to the network to request the content 50. In this example, device 10 sets the initial transmission charge of the interest 60 to -100.

However, it will be appreciated that other charges may be selected. Increasing the magnitude of the charge has the effect of increasing the range of the interest packet. Likewise, decreasing the magnitude of the charge decreases the range of the interest packet.

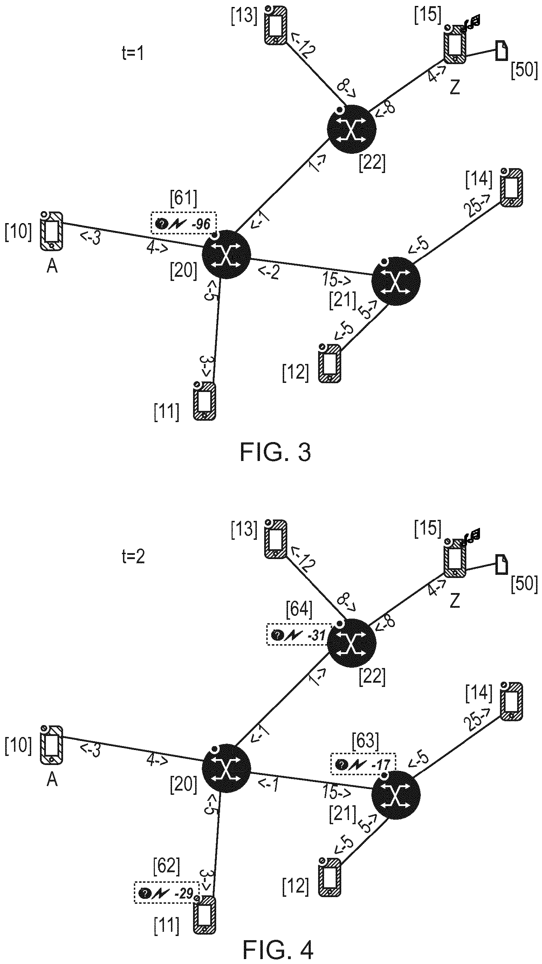

Figure 3 shows the state of the network at time t=1. At this time, the interest packet 60 reaches the router node 20. The interest packet 60 reaches the router node 20 with a reduced received charge of -96, which was reduced due to the resistance of 4 of the link between the device 10 and the router node 20. It will be appreciated that the resistance may be specified in ways other than a simple arithmetic reduction, such as, for example, a percentage reduction or more complicated reduction in charge. The interest packet 60 is stored by the router node 20 with its received charge and details of the link over which the interest packet was received.

The router node 20 determines that it does not have the content requested by the interest packet 60. The router node 20 also has no notion of where the requested content might be. The node 20 decides to split the charge evenly and to route duplicated interest packets 62, 63, 64 on all its outgoing interfaces or links (in a similar manner to a pure flooding algorithm). Each interest packet 62, 63, 64 is thus forwarded from the router node 20 with an initial transmitted charge of -32. However, it will be appreciated that the router node 20 may split the charge other than equally and may split the charge depending on the resistance of the ongoing links in order to favour or avoid high or low resistance links.

Figure 4 shows the arrangement of the network at time t=2. At this time, two more routers 21 and 22 and one device 11 are reached. Again, the interest packets lose charge when traversing each link, and so the received charge is now -17, -31 and -29 respectively because of the resistance of these links. The interest packets are stored by these nodes with their received charge and details of the link over which the interest packet was received. Again, none of the nodes 21, 22 or the device 11 have the requested content stored, so the routers 21 and 22 need to decide which interfaces or links to forward the interest packet on. The device 11 has no onward link and so can safely discard the interest packet. Both the routers 21 and 22 examine their onward links in order to determine how to propagate their interest packet.

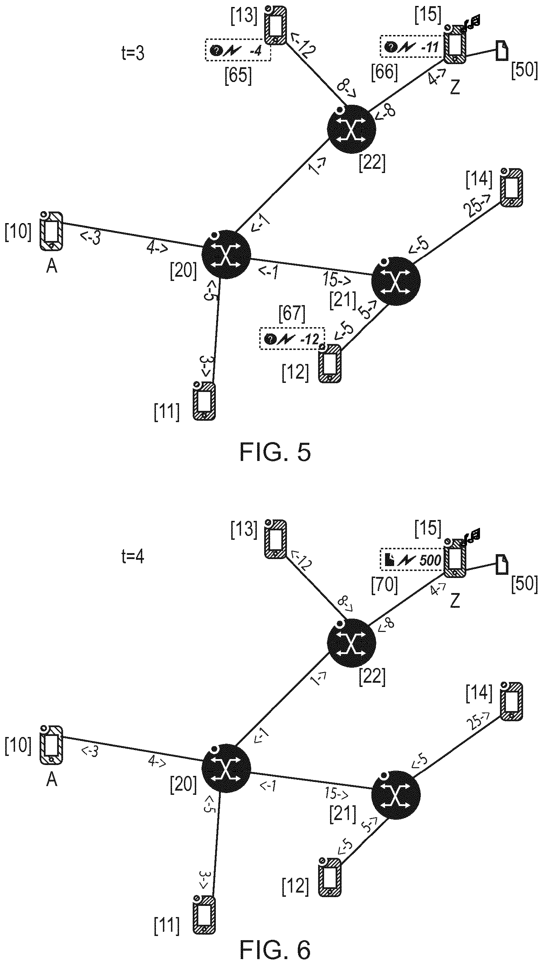

Figure 5 shows the arrangement of the network at time t=3. The router 22 splits the charge of the interest packet 64 between two further duplicated interest packets 65 and 66. In this case, it was not possible to split the charge completely evenly and so slightly more charge was given to interest packet 65 than that given to interest packet 66. However, the network node 21 determines that the interest packet 63 had insufficient charge to be able to be equally split and transmitted over the onward link to the device 14. Hence, network node 21 has only one available onward link for the interest packet 63. Accordingly, a duplicated interest packet 67 with the complete received charge of the interest packet 63 is instead transmitted over the link to the device 12.

Neither the device 12, nor the device 13 has the requested content stored and these devices also have no onward links, so they can safely discard their received interest packets. However, the device 15 does have the requested content.

Hence, it can be seen that the interest packet is forwarded and duplicated by receiving nodes, and the initial charge is split during such duplication and reduced by the resistance of the links in order to constrain the distance that the interest packet travels and resources consumed searching for the content.

### Content Delivery

Figure 6 illustrates the state of the network at time t=4. The device 15 creates a data packet 70 containing the content and assigns it an initial charge of 500. The charge assigned to the content varies based on many factors and will typically influence how long that content is to be stored within the network. The data packet 70 is then sent out on the network interface or link that the interest packet 66 initially arrived on. It will be appreciated that the details of this link will have been stored by network nodes along with the interest packet.

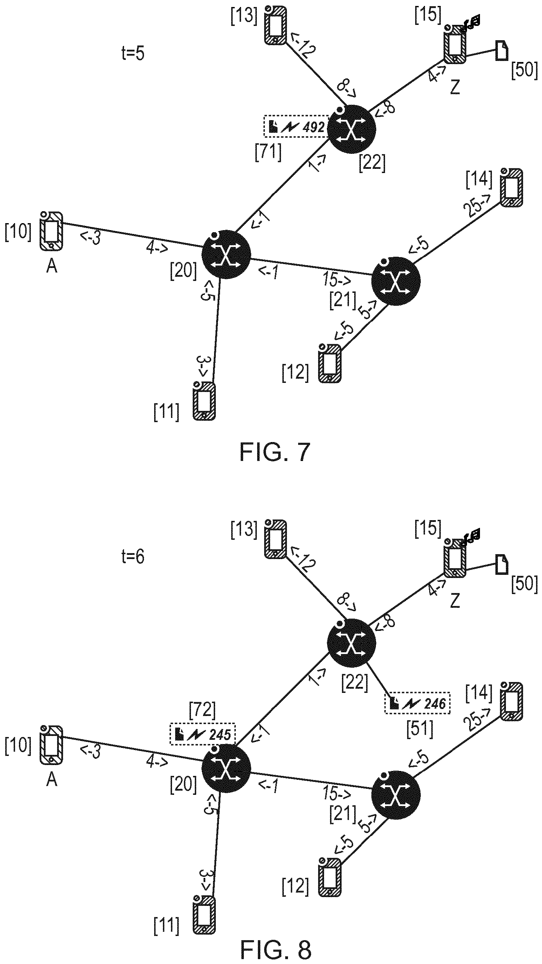

Figure 7 illustrates the arrangement of the network at time t=5. The data packet arrives at the router node 22 with a reduced charge, which was reduced by the resistance of the link between the device 15 and the router node 22. The router node 22 decides to cache a copy of the data packet. This allows for faster delivery if another request for the same data is received in the future, as the data can then be delivered directly from the router node 22 without needing to contact the original source of the data, device 15.

The router node 22 determines that there is an interest packet related to the content packet and determines the link over which that interest packet was received. Accordingly, the router node 22 transmits the content packet 71 with a reduced charge since the charge is split between the content packet transmitted to router 20 and the content stored by the router 22.

Figure 8 illustrates the arrangement of the network at time t=6. At this time, the router 20 has received the content packet 72 with a charge of 245. The router 20 determines that an interest packet is associated with this content and determines that the content should be forwarded over the link with device 10.

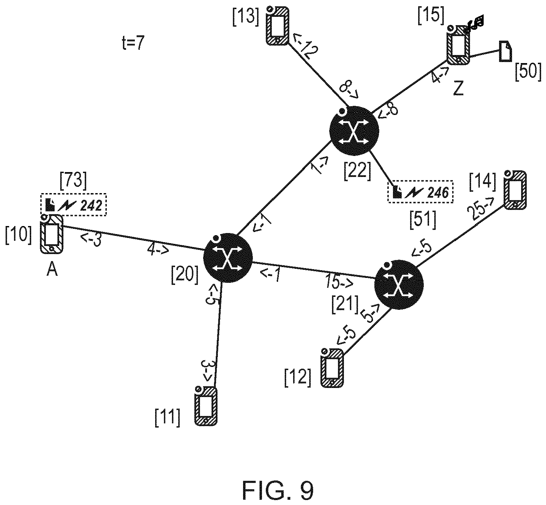

Figure 9 illustrates the arrangement of the network at time t=7. The content packet 73 is received at the device 10 with a charge of 242.

Accordingly, it can be seen that the interest packet was routed throughout the network by network nodes which had no idea where the content might be located. Likewise, the content is routed back via a direct route between the devices requesting and providing the content.

### Charge Decay

As time passes, the charges associated with the unfulfilled interest packets are decayed and those interest packets will be deleted once the charge is eliminated, exhausted or extinguished or falls below a threshold value. Likewise, the charge associated with the content will also decay until that charge is extinguished, at which point the content will be deleted.

### Resistance Values

When a device or router becomes congested, it should increase the resistance on its incoming links. When the congestion passes, or the router or device has been idle for some time, the resistance on its incoming links should be decreased gradually until it reaches a minimum threshold resistance value. The resistance may be adjusted for other reasons such as, for example, economic reasons.

The following describe various modifications that may be made to the embodiments described above.

It is possible to have different splitting policy for charges associated with data packets. For example, if the router 22 in Figure 7 that handles the data packet at time t=5 believes the content to be particularly volatile, or for some other reason it wants a high turnover of items that it caches, it can split the charge in some other way such as, for example, 90/10 instead of 50/50, in order to reduce the time that that content is cached. Likewise, a router may choose to forward a data packet on a particularly low-resistance link, even if no negative charge for the content exists. This will allow content to disseminate pre-emptively in a way similar to how content delivery networks currently work.

It is also possible to set the resistance on links on a per-prefix basis instead of per link. It will be appreciated that the prefix is the first part of a name (for example, YouTube, BreakingNews, etc.) which identifies a content provider. This would allow a node to prioritise traffic from one source (for example, real-time video chat) over a link that is otherwise congested, by associating that prefix with a low resistance and other prefixes with a higher resistance. In conjunction with this enhancement, data packets propagating through the network may have their charges strengthened by the charge left behind by interest packets (that is, adding the charge of the associated interest packet to the charge of the content at a network node in order to reward them for following the correct path back to the originator of the request).

It is also possible to change the way that the charge stored in the network decays.

It is also possible that the way that the charge is reduced or decayed when traversing across a link can be effected based on a percentage change of the charge, rather than a numerical reduction. This means that the resistance may be expressed as a percentage rather than as an absolute number.

It is also possible that the resistance values can be piggy-backed onto any packet traversing the data links, so as to save the need to transmit update packets when the resistance value changes.

Embodiments respond quickly to heavily-loaded routes by raising resistance. They also automatically allow multi-point delivery as the interests are split up and the routers with the data respond, assuming they have the data. Multi-point delivery can therefore readily be achieved by sending interests for multiple parts of the data, or where the data is provided by multiple sources. In addition, embodiments can improve security by, for example, increasing the resistance for prefixes or for devices suspected to be adversarial.

Accordingly, it can be seen that embodiments provide a new routing algorithm for content-centric networks. The algorithm does not necessarily need to wait for routing table consensus amongst the nodes in the network, which makes it well suited to cater for highly-dynamic network environments where both content consumers and producers may be mobile. The protocol also responds quickly to changes and provides multi-point delivery capabilities. Furthermore, the protocol is very general in its ability to adapt because the main parameters can be adjusted according to many different policies, thus achieving a number of different goals such as, for example, fast adaptiveness, a high degree of caching, etc.

This approach utilises three main parameters that help the network to route efficiently in a highly dynamic environment: an interest charge (which can be considered to be the importance or priority of the interest), a data charge (which can be considered to be the reliability or age of the data), both of which are determined by the end points of the routing paths, as well as link resistances that are determined by the nodes that operate the links in question. Together, these three main parameters form a flexible and powerful tool that gives the network a highly-adaptive, multi-point-capable routing scheme.

It will be appreciated that embodiments differ to current approaches, as will be described in more detail below.

In a so-called 'pheromone-based' routing scheme, virtual "ants" travel on the network links and deposit trace amounts of a virtual hormone (the pheromone). The more ants travel across a link, the more pheromone will be deposited. As the hormone acts as an attractor to other ants, this again will cause more ants to use the link. By starting out with a pheromone-free network and ants roaming at random, the network will converge toward using the links that provide the ants with the content they are looking for (their "food") the quickest, because faster delivery times means that more ants can travel on the link and thus deposit more pheromone. Over time, the pheromone traces evaporate, if they are not replenished, and the ants will be more likely to try other routes. If the food source is moved, ants will still go to the location where it used to be, and start a random search from there.

Pheromone-based routing schemes are very efficient at establishing a routing path in a network where they know nothing of the topology. In general, however, they are not very good at adapting to changing environments, because well-established links full of pheromone are chosen ahead of new, better routes, for a long time and also suffer from the fault that they can converge to non-optimal routes (though some approaches decrease the likelihood of this happening). They also do not handle multi-point delivery well; as a matter of fact they tend to converge away from multi-point delivery as the most travelled route constant gets more pheromone than less travelled routes and thus increasingly get chosen.

One approach re-implements Mobile IP in a content centric network (CCN)-based network. Every content producer, A, in the network is assigned a "home" content router that will always be contacted when one wants to retrieve content from A. A must then inform its home content router of its whereabouts in the network such that traffic can be forwarded to it.

This approach, and most like it, improves on the time it takes for the routing tables in a CCN network to reach a sane state after a node has moved. However, it introduces an added layer of complexity by needing update and acknowledgement messages passed between nodes and their home content routers. It also increases the amount of traffic that needs to be transferred in the network as a whole because of the redirection of data from the content router to A. Finally, it assumes that every content producer in the network can be assigned a "home" content router, which in essence merely moves the problem of where to implement network dynamicity one step further into the cloud rather than tackling the root of the problem.

A Gradient Routing in Ad Hoc Networks (GRAd) algorithm has some similarities to the embodiments mentioned above: The nodes in the network establish a least-cost route (from one node to another) and communication will avail of that route once established. When routes are disused, they decay and must after some timeout be reestablished. The setting of this timeout determines the trade-off between bandwidth used to exchange routing information and resilience to changes in the topology. GRAd is meant for radio networks, and thus relies on hop counts determined by broadcasts to calculate least-cost routes.

Like the pheromone-based networking, GRAd relies solely on a single path between producer and consumer once such a path has been found. It also has no means for nodes in the network to determine a "cost" for routing - either a link exists or it does not. And finally, it does not support the multi-point delivery made possible with CCN.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for a network node (20, 21, 22) of a content-centric network the method, comprising:
receiving an interest packet (60) over a link from a requesting network node requesting content be provided, said interest packet having a received charge value associated therewith, a magnitude of said charge value affecting how far the interest packet is able to propagate throughout the network; wherein
said received charge value comprises a transmitted charge value of said interest packet reduced by a resistance associated with said link over which said interest packet is received;
determining whether said content is available to said network node and, if not,
identifying available onward links to other network nodes;
splitting said received charge value between duplicated interest packets (62, 63, 64), each having a transmitted charge value; and
transmitting one of said duplicated interest packets over each available onward link.

2. The method of claim 1, wherein said step of splitting comprises splitting said received charge one of equally and non-equally between said duplicated interest packets.

3. The method of claim 1 or 2, wherein each onward link has a resistance associated therewith and said available onward links comprise at least one of those onward links for which a transmitted charge value of said duplicated interest packet reduced by said resistance associated with said link over which said interest packet is received fails to be exhausted, and those onward links whose resistance fails to exceed said transmitted charge value of a duplicated interest packet intended for that onward link.

4. The method of any preceding claim, comprising:
storing said interest packet with said received charge value.

5. The method of any preceding claim, comprising:
degrading said received charge value.

6. The method of any preceding claim, comprising:
removing interest packets whose received charge value fails to exceed a threshold.

7. The method of any preceding claim, comprising:
on determining that said content is available, transmitting said content over a link which received said interest packet, said content having a content transmitted charge value a magnitude of said content transmitted charge value affecting how far the content can propagate through the network and how long it may be stored by a network node.

8. The method of claim 7, wherein a content received charge value comprises said content transmitted charge value of said content reduced by said resistance associated with said link over which said content is received.

9. The method of any preceding claim, comprising:
storing said content with said content received charge value.

10. The method of any preceding claim, comprising:
degrading said content received charge value.

11. The method of any preceding claim, comprising:
removing content whose content received charge value fails to exceed a threshold.

12. The method of any preceding claim, comprising:
varying resistance of links with other network nodes in response to changes in operating conditions of said network node.

13. A computer program product operable, when executed on a computer, to perform the method steps of any preceding claim.

14. A content-centric network node (20, 21, 22), comprising:
reception logic operable to receive an interest packet (60) over a link from a requesting network node requesting content be provided, said interest packet having a received charge value associated therewith, a magnitude of said charge value affecting how far the interest packet is able to propagate throughout the network; wherein
said received charge value comprises a transmitted charge value of said interest packet reduced by a resistance associated with said link over which said interest packet is received; and
logic operable to determine whether said content is available to said network node and, if not, to identify available onward links to other network nodes, to split said received charge between duplicated interest packets (62, 63, 64), each having a transmitted charge value and to transmit one of said duplicated interest packets over each available onward link.

## Patentansprüche

1. Verfahren für einen Netzknoten (20, 21, 22) eines inhaltzentrierten Netzes, wobei das Verfahren umfasst:
Empfangen eines interessierenden Pakets (60) über eine Verbindung von einem anfordernden Netzknoten, der die Bereitstellung von Inhalt anfordert, wobei das besagte interessierende Paket einen ihm zugehörigen empfangenen Ladungswert aufweist, wobei eine Größe des besagten Ladungswerts beeinflusst, wie weit das interessierende Paket im Netz propagieren kann; wobei
der besagte empfangene Ladungswert einen gesendeten Ladungswert des besagten interessierenden Pakets reduziert um einen Widerstand, der der besagten Verbindung zugehörig ist, über die das besagte interessierende Paket empfangen wird, umfasst;
Bestimmen, ob der besagte Inhalt für den besagten Netzknoten verfügbar ist, und wenn nicht,
Identifizieren verfügbarer Weiterleitungsverbindungen zu anderen Netzknoten; Aufteilen des besagten empfangenen Ladungswert zwischen duplizierten interessierenden Paketen (62, 63, 64), die jeweils einen gesendeten Ladungswert aufweisen; und
Senden von einem der besagten duplizierten interessierenden Pakete über jede verfügbare Weiterleitungsverbindung.

2. Verfahren nach Anspruch 1, wobei besagter Schritt des Aufteilens Aufteilen der besagten empfangenen Ladung entweder gleichmäßig oder ungleichmäßig zwischen den besagten duplizierten interessierenden Paketen umfasst.

3. Verfahren nach Anspruch 1 oder 2, wobei jede Weiterleitungsverbindung einen ihr zugehörigen Widerstand aufweist und die besagten verfügbaren Weiterleitungsverbindungen wenigstens eine derjenigen Weiterleitungsverbindungen, für die ein gesendeter Ladungswert des besagten duplizierten interessierenden Pakets reduziert um den der besagten Verbindung, über die das besagte interessierende Paket empfangen wird, zugehörigen besagten Widerstand nicht erschöpft wird, und derjenigen Weiterleitungsverbindungen umfassen, deren Widerstand den besagten gesendeten Ladungswert eines duplizierten interessierenden Pakets, das für diese Weiterleitungsverbindung vorgesehen ist, nicht überschreitet.

4. Verfahren nach einem beliebigen der vorangehenden Ansprüche, umfassend:
Speichern des besagten interessierenden Pakets mit dem besagten empfangenen Ladungswert.

5. Verfahren nach einem beliebigen der vorangehenden Ansprüche, umfassend:
Herabstufen des besagten empfangenen Ladungswerts.

6. Verfahren nach einem beliebigen der vorangehenden Ansprüche, umfassend:
Entfernen interessierender Pakete, deren empfangener Ladungswert einen Schwellenwert nicht überschreitet.

7. Verfahren nach einem beliebigen der vorangehenden Ansprüche, umfassend:
wenn bestimmt wird, dass der besagte Inhalt verfügbar ist, Übertragen des besagten Inhalts über eine Verbindung, die das besagte interessierende Paket empfangen hat, wobei der besagte Inhalt einen gesendeten Inhaltladungswert aufweist, wobei eine Größe des besagten gesendeten Inhaltladungswerts beeinflusst, wie weit der Inhalt durch das Netz propagieren kann und wie lange er von einem Netzknoten gespeichert werden kann.

8. Verfahren nach Anspruch 7, wobei ein empfangener Inhaltladungswert den besagten gesendeten Inhaltladungswert des besagten Inhalts reduziert um den besagten Widerstand, der der besagten Verbindung, über die der besagte Inhalt empfangen wird, zugehörig ist, umfasst.

9. Verfahren nach einem beliebigen der vorangehenden Ansprüche, umfassend:
Speichern des besagten Inhalts mit dem besagten empfangenen Inhaltladungswert.

10. Verfahren nach einem beliebigen der vorangehenden Ansprüche, umfassend:
Herabstufen des besagten durch Inhalt empfangenen Ladungswerts.

11. Verfahren nach einem beliebigen der vorangehenden Ansprüche, umfassend:
Entfernen von Inhalt, dessen empfangener Inhaltladungswert einen Schwellenwert nicht überschreitet.

12. Verfahren nach einem beliebigen der vorangehenden Ansprüche, umfassend:
Variieren des Widerstands von Verbindungen mit anderen Netzknotens in Reaktion auf Änderungen der Betriebsbedingungen des besagten Netzknotens.

13. Computerprogrammprodukt, das bei Ausführung auf einem Computer betriebsfähig ist, die Verfahrensschritte nach einem beliebigen der vorstehenden Ansprüche durchzuführen.

14. Inhaltzentrierter Netzknoten (20, 21, 22), umfassend:
Empfangslogik, die betriebsfähig ist, um ein interessierendes Paket (60) über eine Verbindung von einem anfordernden Netzknoten zu empfangen, der die Bereitstellung von Inhalt anfordert, wobei das besagte interessierende Paket einen ihm zugehörigen empfangenen Ladungswert aufweist, wobei eine Größe des besagten Ladungswerts beeinflusst, wie weit das interessierende Paket im Netz propagieren kann; wobei der besagte empfangene Ladungswert einen gesendeten Ladungswert des besagten interessierenden Pakets reduziert um einen Widerstand, der der besagten Verbindung zugehörig ist, über die das besagte interessierende Paket empfangen wird, umfasst; und
Logik, die betriebsfähig ist, um zu bestimmen, ob der besagte Inhalt für den besagten Netzknoten verfügbar ist, und wenn nicht, verfügbare Weiterleitungsverbindungen zu anderen Netzknoten zu identifizieren, die besagte empfangene Ladung zwischen duplizierten interessierende Paketen (62, 63, 64) aufzuteilen, die jeweils einen gesendeten Ladungswert aufweisen, und eines der besagten duplizierten interessierenden Pakete über jede verfügbare Weiterleitungsverbindung zu übertragen.

## Revendications

1. Procédé destiné à un noeud de réseau (20, 21, 22) d'un réseau centré sur le contenu, le procédé comprenant les étapes suivantes :
recevoir un paquet d'intérêt (60) sur une liaison en provenance d'un noeud de réseau demandeur demandant qu'un contenu soit distribué, ledit paquet d'intérêt présentant une valeur de charge reçue qui lui est associée, l'ampleur de ladite valeur de charge influençant la distance sur laquelle le paquet d'intérêt peut se propager dans le réseau ; dans lequel
ladite valeur de charge reçue comprend une valeur de charge transmise dudit paquet d'intérêt diminuée par une résistance associée à ladite liaison sur laquelle ledit paquet d'intérêt est reçu ;
déterminer si ledit contenu est disponible pour ledit noeud de réseau et, si ce n'est pas le cas,
identifier des liaisons aval disponibles vers d'autres noeuds de réseau ; diviser ladite valeur de charge reçue entre des paquets d'intérêt dupliqués (62, 63, 64), chacun d'entre eux présentant une valeur de charge transmise ; et
transmettre l'un desdits paquets d'intérêt dupliqués sur chaque liaison aval disponible.

2. Procédé selon la revendication 1, dans lequel ladite étape de division comprend la division de ladite charge reçue soit de manière égale, soit de manière inégale entre lesdits paquets d'intérêt dupliqués.

3. Procédé selon la revendication 1 ou 2, dans lequel chaque liaison aval présente une résistance qui lui est associée et lesdites liaisons aval disponibles comprennent au moins l'une de ces liaisons aval pour lesquelles une valeur de charge transmise dudit paquet d'intérêt dupliqué diminuée par ladite résistance associée à ladite liaison sur laquelle ledit paquet d'intérêt est reçu n'a pas été épuisée, et ces liaisons aval dont la résistance n'a pas dépassé ladite valeur de charge transmise d'un paquet d'intérêt dupliqué destiné à cette liaison aval.

4. Procédé selon l'une quelconque des revendications précédentes, comprenant l'étape suivante :
stocker ledit paquet d'intérêt avec ladite valeur de charge reçue.

5. Procédé selon l'une quelconque des revendications précédentes, comprenant l'étape suivante :
abaisser ladite valeur de charge reçue.

6. Procédé selon l'une quelconque des revendications précédentes, comprenant l'étape suivante :
éliminer les paquets d'intérêt dont la charge reçue n'a pas dépassé un seuil.

7. Procédé selon l'une quelconque des revendications précédentes, comprenant l'étape suivante :
lorsqu'il est déterminé que ledit contenu est disponible, transmettre ledit contenu sur une liaison qui a reçu ledit paquet d'intérêt, ledit contenu présentant une valeur de charge transmise de contenu, l'ampleur de ladite valeur de charge transmise de contenu influençant la distance sur laquelle le contenu peut se propager dans le réseau et la durée pendant laquelle il peut être stocké par un noeud de réseau.

8. Procédé selon la revendication 7, dans lequel une valeur de charge reçue de contenu comprend ladite valeur de charge transmise de contenu dudit contenu diminuée par ladite résistance associée à ladite liaison sur laquelle ledit contenu est reçu.

9. Procédé selon l'une quelconque des revendications précédentes, comprenant l'étape suivante :
stocker ledit contenu avec ladite valeur de charge reçue de contenu.

10. Procédé selon l'une quelconque des revendications précédentes, comprenant l'étape suivante :
abaisser ladite valeur de charge reçue de contenu.

11. Procédé selon l'une quelconque des revendications précédentes, comprenant l'étape suivante :
éliminer le contenu dont la valeur de charge reçue de contenu n'a pas dépassé un seuil.

12. Procédé selon l'une quelconque des revendications précédentes, comprenant l'étape suivante :
faire varier la résistance des liaisons avec les autres noeuds de réseau en réponse aux modifications des conditions de fonctionnement dudit noeud de réseau.

13. Produit-programme informatique permettant, lorsqu'il est exécuté sur un ordinateur, de mettre en oeuvre les étapes de procédé selon l'une quelconque des revendications précédentes.

14. Noeud de réseau centré sur le contenu (20, 21, 22), comprenant :
une logique de réception permettant de recevoir un paquet d'intérêt (60) sur une liaison en provenance d'un noeud de réseau demandeur demandant qu'un contenu soit distribué, ledit paquet d'intérêt présentant une valeur de charge reçue qui lui est associée, l'ampleur de ladite valeur de charge influençant la distance sur laquelle le paquet d'intérêt peut se propager dans le réseau ; dans lequel ladite valeur de charge reçue comprend une valeur de charge transmise dudit paquet d'intérêt diminuée par une résistance associée à ladite liaison sur laquelle ledit paquet d'intérêt est reçu ; et
une logique permettant de déterminer si ledit contenu est disponible pour ledit noeud de réseau et, si ce n'est pas le cas, d'identifier des liaisons aval disponibles vers d'autres noeuds de réseau, de diviser ladite valeur de charge reçue entre des paquets d'intérêt dupliqués (62, 63, 64), chacun d'entre eux présentant une valeur de charge transmise, et de transmettre l'un desdits paquets d'intérêt dupliqués sur chaque liaison aval disponible.
